# EUROPEAN PATENT SPECIFICATION

(11) **EP 0 723 977 B1**
(45) Date of publication and mention of the grant of the patent: **21.06.2000**
(21) Application number: 95250019.7
(22) Date of filing: 26.01.1995
(51) Int. Cl.: C08F 6/00

(54) **Method for product recovery of polyolefins**
Verfahren zur Gewinnung von Polyolefinen
Procédé de récupération de polyoléfines

(43) Date of publication of application: 31.07.1996
(73) Proprietor: Huntsman Polymers Corporation, Salt Lake City, UT 84108 (US)
(72) Inventor: McHaney, Stephen, Odessa, TX 79762 (US)
(74) Representative: UEXKÜLL & STOLBERG

(56) References cited:
- EP-A- 0 123 882
- EP-A- 0 348 907
- FR-A- 2 387 753
- GB-A- 1 510 261
- US-A- 4 099 335
- US-A- 4 701 489

## Description

### TECHNICAL FIELD:

The present invention relates to a method of product recovery for high-molecular-weight amorphous poly alpha-olefins.

### BACKGROUND OF THE INVENTION

High-molecular-weight amorphous poly alpha-olefins such as amorphous propylene homo- and co-polymers, are important for their use in diverse products. The broad utility of these materials is due in large part to the unique combination of chemical and physical properties such as chemical inertness, softness, flexibility, etc., exhibited by these materials.

Conventionally, amorphous polyolefins are formed in a reactor and mixed with water to deactivate catalysts and remove any monomer(s). Removing the catalysts and any monomer(s) renders wet, granular chunks of the product. For the material to be shaped into various products, the chunks must be dried and then extruded or otherwise shaped.

Extrusion of the material typically involves feeding the dried chunks from a hopper to the feed section of a screw-type extruder. The polyolefin material is moved through the extruder by screw flights where it is heated and mechanically worked before it is pelletized or otherwise shaped under high pressure. Alternatively, such materials are also shaped by other high temperature methods such as injection molding, roll milling and compression molding. Both lower- and higher-molecular-weight amorphous poly alpha-olefins are typically processed as outlined above.

However, existing methods of product recovery require the introduction of water to carry the material through the several stages of recovery. The extensive use of water by these methods requires that additional storage tanks, delivery and removal lines and other miscellaneous equipment be used to introduce, maintain, remove and recycle the necessary volume of water. Additionally, existing methods store the material in a chunk form prior to extrusion into useable products, thus requiring additional storage tanks and associated maintenance equipment for this intermediate stage of processing.

Thus a need has arisen for a product recovery method for polyolefins, particularly high-molecular-weight amorphous poly alpha-olefins, wherein the use of water during the product recovery is significantly decreased and wherein the intermediate stage of storing and drying the chunk form of the polyolefin is eliminated.

EP-A-0 348 907 discloses an apparatus for the post reaction treatment of resins produced by fluidized bed polymerization of alpha olefins to produce polymer granules. It is directed to the manipulation of "sticky" polymers, which it characterizes as those which agglomerate above a "sticking" temperature. The "sticky" particles of are only sticky at certain temperatures higher than the reactor temperature. It is important to note, however, that the reference also teaches only the transfer of polymer particles form the fluidized bed reactor to the extruder.

EP-A-0 123 882 discloses a method of polymer manipulation that is inapplicable to the handling of sticky polymers. It discloses the mixing of a solution of propylene oxide in water with small particle polyolefins.

### SUMMARY OF THE INVENTION

The invention relates to a method as claimed in Claim 1.

The present invention overcomes the foregoing and other problems associated with the prior art by providing a product recovery method for polyolefins, particularly high-molecular-weight amorphous poly alpha-olefins, wherein the use of water during the method is significantly decreased, reducing the need for additional equipment such as storage tanks, lines and valves, and wherein the method operates such that intermediate storage of the material is eliminated, thus preventing the need for additional storage tanks and associated maintenance equipment.

According to the present method of product recovery for polyolefins, the monomer(s) for the polyolefin are fed into a reactor. The reactor is cooled to maintain the appropriate temperature necessary for the production of the desired polyolefin. Depending upon the polyolefin desired, appropriate catalysts are added to the reactor.

As the polyolefin material is produced, it is transferred from the reactor to a kneader. This transfer is accomplished via a blipper valve. Inside the kneader, the polyolefin material is heated to drive off any unreacted monomer(s) remaining in the polyolefin material. Sigma blades are used to mechanically work the product material to facilitate this removal process.

The polyolefin material is then transferred via the screw flights of the kneader to an extruder for further processing. This step of the method, the direct transfer of the polyolefin material in a liquid form, provides a distinct advantage over prior methods of storing the polyolefin in wet chunk form and drying the chunks at a later date for extrusion.

In the extruder, the polyolefin material is mixed with small amounts of water to deactivate any remaining catalyst(s) in the material and antioxidants. Heating the material further drives off any unreacted monomer(s), antioxidant solvents and excess steam added during this stage.

Finally, the polyolefin material is transferred to a pelletizer where it is pelletized for storage and/or use.

High-molecular-weight amorphous poly alpha-olefins exhibit increased tackiness and viscosity when compared with lower-molecular-weight poly alpha-olefins. Product recovery of these higher-molecular-weight poly alpha-olefins has proven especially successful utilizing the present method of recovery.

The present method minimizes the use of water to carry the product through the several stages of recovery processing, thereby minimizing the need for storage tanks, delivery and removal lines, valves and other equipment used to introduce, maintain, remove and recycle the water. Additionally, the present method allows for continuous processing of the polyolefin material in a substantially liquid or molten state. This avoids the intermediate step associated with existing methods of product recovery wherein the material is stored as wet chunks and dried at a later stage for further processing. The elimination of this step also precludes the need for additional equipment required for the storage, maintenance and drying of the product material prior to further processing.

### BRIEF DESCRIPTION OF THE DRAWINGS

For a more complete understanding of the present invention and the advantages thereof, reference is now made to the following description taken in conjunction with the accompanying drawings in which:
FIGURE 1 illustrates the apparatus associated with the product recovery method of the present invention; and
FIGURE 2 is a flow diagram illustrating the steps associated with the product recovery method of the present invention.

### DETAILED DESCRIPTION OF THE DRAWINGS

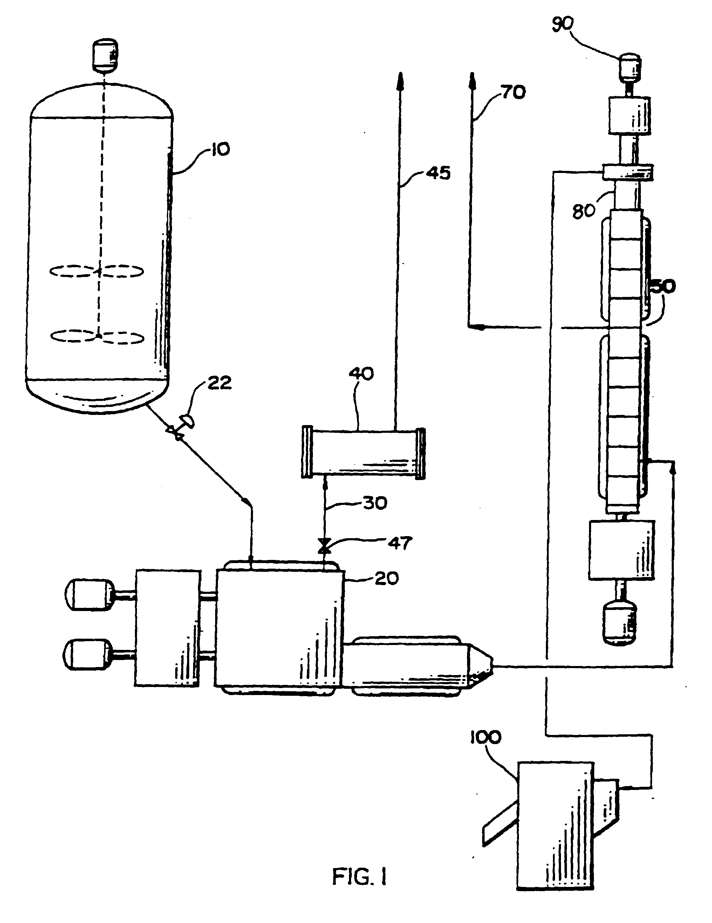

Referring now to FIGURE 1, there is shown the apparatus associated with the product recovery method of the present invention.

The monomer(s) comprising the polyolefin to be produced are continuously fed into a reactor 10. The monomer(s) utilized will naturally depend upon the polyolefin to be produced. The reactor is cooled and pressurized to maintain the desired temperature and pressure for the reaction to occur. The resulting polymer is continuously transferred to a kneader 20 via a blipper valve 22. The use of a blipper valve 22 allows for convenient control of the rate at which the product material is released from the reactor 10 to the kneader 20.

In the kneader 20, the product material is heated to a temperature of from about 121 - 260°C (250° - 500° Fahrenheit), depending upon the polyolefin to be produced. This increase in temperature drives off unreacted elements contained within the product material, such as unreacted propylene, ethylene, hydrogen and other monomers.

A pair of sigma blades (not shown) within the kneader 20 mechanically works the product material to facilitate the removal of unreacted monomers and other volatiles from the product material. The gases produced by this process are vented through a vent line 30 from the kneader 20 to a knockout pot 40. From the knockout pot 40, the vented gases are purified and returned to the polyolefin plant for reuse via return line 45. To prevent carryover of the polyolefin material into the vent line 30, a vent valve 47 closes during each blip of material from the reactor 10 to the kneader 20. With the vent valve 47 closed, the high gas velocity within the relatively small volume kneader does not drive the polyolefin material into the vent line 30. The vent valve 47 is operated by a microprocessor-based timer (not shown) which controls and coordinates both the blipper valve 22 and the vent valve 47.

Product material is delivered from the sigma blades to a variable speed screw (not shown). The screw fights transfer the product material from the kneader 20 to an extruder 50. The speed of the screw is adjusted so as to maintain a constant inventory of product material in the kneader 20. The barrel of the screw is heated to maintain the product material at a temperature substantially consistent with the temperature in the kneader 20.

In the extruder 50, the product material is mixed with steam to deactivate the catalysts and with additives to achieve the desired polyolefin material. The steam is added, via a metered water pump (not shown) to deactivate the catalyst(s) added to the reactor 10 to facilitate formation of the polyolefin. Importantly, this is the only place that water is used in the product recovery method of the present invention.

Additional heating facilitates the removal of any excess water and further removes any remaining unreacted monomers or other volatiles from the product material. Gases produced within the extruder 50 are vented via an extruder vent line 70 from the extruder 50.

From the extruder 50, the product material is transferred to a pelletizer 80. The pelletizer 80 includes a die plate and a set of rotating blades (not shown) driven by a variable speed motor 90. Heat is provided to the die plate to maintain the product material at an extrusion temperature. As the product material emerges from the die holes, it is cut into pellets sized according to the speed of the rotating blades and is cooled by circulating water. The product material rapidly solidifies upon contact with the water.

The pellets are carried by flowing water to a dryer 100, where the pellets are recovered from the water and dried with air. The pellets are then packaged and stored for later use.

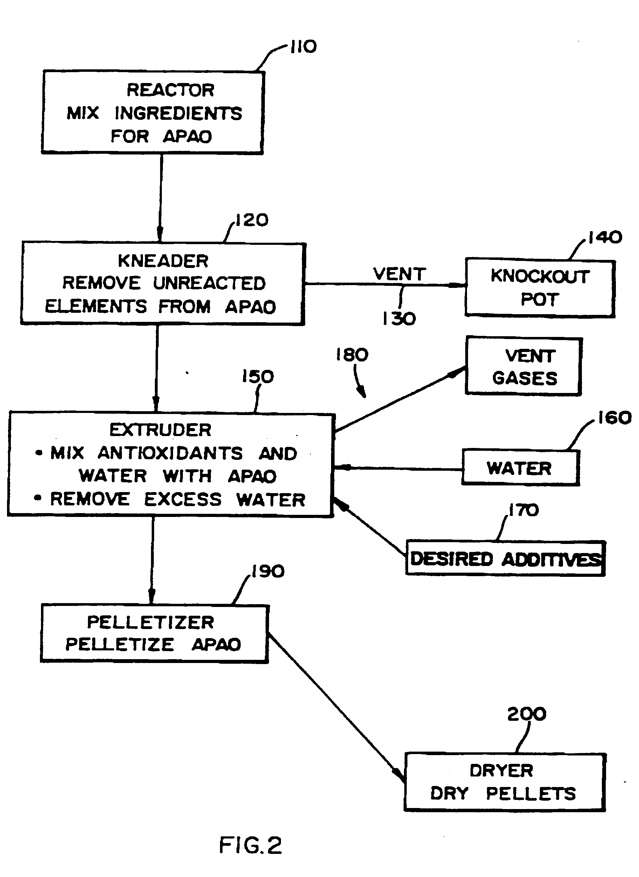

FIGURE 2 is a flow diagram illustrating the steps associated with the product recovery method of the present invention. The monomer(s) necessary to produce the desired polyolefin are continuously fed into a reactor during step 110. The reactor is cooled to facilitate the production of the polyolefin material. Polyolefin material is then transferred to a kneader where unreacted monomer(s) and volatile(s) are removed 120. The monomer(s) and volatile(s) are driven off by heating the polyolefin material in the kneader. Mechanical working of the polyolefin material by a pair of sigma blades in this step enhances the removal of unreacted elements. Gases produced during this step of the process are vented through a knockout pot and are purified for reuse 130 and 140.

In step 150, the polyolefin material is transferred to an extruder where water and desired additives such as antioxidants are mixed with the polyolefin material 160 and 170. The addition of water deactivates the catalysts in the polyolefin material. Gases produced during this step of the product recovery method are also vented 180.

Next, the polyolefin material is transferred from the extruder to a pelletizer. In the pelletizer, the polyolefin material is cut via rotating blades into pellets and is cooled by circulating water 190. The pellets are transferred by the flowing water to a dryer. The pellets are removed from the water and dried with air prior to being packaged or used 200.

## Claims

1. A method for the recovery of a high-molecular-weight amorphous polyolefin which includes:
reacting monomer(s) in a reactor to form a high molecular weight amorphous polyolefin;
continuously transferring blips of material containing the polyolefin along with residual catalyst and unreacted monomer(s) as a mixture from the reactor directly through a conduit which contains a blipper valve to a kneader, the kneader having a pair of sigma blades, a kneader vent line and a kneader vent valve for venting unreacted monomer(s);
venting unreacted monomers) from the kneader through the vent line and vent valve;
controlling the operation of the blipper valve and the kneader vent valve to transfer material blips from the reactor to the kneader primarily when the blipper valve is open and when the kneader vent valve is closed to substantially avoid carryover of polyolefin into the kneader vent line during the venting step;
heating the mixture of material blips in the kneader to a temperature of from about 121 - 260°C (250°F to 500°F) while kneading the mixture for a time sufficient to remove unreacted monomer(s) from the polyolefin and to facilitate transfer of the recovered polyolefin from the kneader to an extruder; and
controlling the material blip transfer, heating and kneading steps to maintain a substantially constant inventory of the polyolefin in the kneader.

2. The method of claim 1, which further includes deactivating residual catalyst contained in the polyolefin in the extruder.

3. The method of claim 2, which further includes deactivating the catalyst by mixing the polyolefin with steam in the extruder.

4. The method of claim 1, wherein the kneading step includes mechanically working the polyolefin in the kneader with the pair of sigma blades for a time sufficient to facilitate the removal of unreacted monomer(s).

5. The method of claim 1, which further includes controlling the temperature of the polyolefin in the extruder to be substantially the same as the temperature of the polyolefin in the kneader.

6. The method of claim 2, which further includes heating the polyolefin in the extruder to facilitate the venting of steam and the removal of remaining unreacted monomer(s).

7. The method of claim 1, wherein the material blips are transferred to the kneader without introducing water therein.

## Patentansprüche

1. Verfahren zur Gewinnung eines amorphen Polyolefins mit hohem Molekulargewicht, bei dem
Monomer(e) in einem Reaktor unter Bildung von amorphem Polyolefin mit hohem Molekulargewicht umgesetzt werden,
kontinuierlich Materialblips, die das Polyolefin zusammen mit restlichem Katalysator und nicht umgesetztem Monomer/nicht umgesetzten Monomeren als Mischung enthalten, aus dem Reaktor direkt über eine Rohrleitung, die ein Blipperventil enthält, zu einem Kneter transportiert werden, wobei der Kneter ein Paar Sigmaschaufeln, eine Kneterentlüftungsleitung und ein Kneterentlüftungsventil zum Entlüften von nicht umgesetztem Monomer/nicht umgesetzten Monomeren aufweist,
nicht umgesetztes Monomer/nicht umgesetzte Monomere aus dem Kneter über die Entlüftungsleitung und das Entlüftungsventil entlüftet werden,
der Betrieb des Blipperventils und des Kneterentlüftungsventils so gesteuert werden, daß Materialblips von dem Reaktor zu dem Kneter hauptsächlich dann transportiert werden, wenn das Blipperventil offen und das Kneterentlüftungsventil geschlossen ist, um im wesentlichen das Mittragen von Polyolefin in die Kneterentlüftungsleitung während des Entlüftungsschritts zu vermeiden,
die Mischung aus Materialblips in dem Kneter auf eine Temperatur von etwa 121 bis 260°C (250°F bis 500°F) erhitzt wird, während die Mischung für eine ausreichende Zeitdauer geknetet wird, um nicht umgesetztes Monomer/nicht umgesetzte Monomere aus dem Polyolefin zu entfernen und den Transport des gewonnenen Polyolefins von dem Kneter zu einem Extruder zu erleichtern, und
die Materialbliptransport-, Erwärmungs- und Knetschritte gesteuert werden, um einen im wesentlichen konstanten Bestand des Polyolefins in dem Kneter aufrechtzuerhalten.

2. Verfahren nach Anspruch 1, bei dem ferner restlicher Katalysator, der in dem Polyolefin enthalten ist, in dem Extruder deaktiviert wird.

3. Verfahren nach Anspruch 2, bei dem ferner der Katalysator durch Mischen des Polyolefins mit Dampf in dem Extruder deaktiviert wird.

4. Verfahren nach Anspruch 1, bei dem der Knetschritt das mechanische Durcharbeiten des Polyolefins in dem Kneter mit dem Paar von Sigmaschaufeln für eine ausreichende Zeitdauer einschließt, um die Entfernung von nicht umgesetztem Monomer/nicht umgesetzten Monomeren zu erleichtern.

5. Verfahren nach Anspruch 1, bei dem die Temperatur des Polyolefins in dem Extruder so gesteuert wird, daß sie im wesentlichen die gleiche wie die Temperatur des Polyolefins in dem Kneter ist.

6. Verfahren nach Anspruch 2, bei dem ferner das Polyolefin in dem Extruder erhitzt wird, um das Entlüften von Dampf und die Entfernung von nicht umgesetztem Monomer/nicht umgesetzten Monomeren zu erleichtern.

7. Verfahren nach Anspruch 1, bei dem die Materialblips in die Kneterzone transportiert werden, ohne in diese Wasser einzubringen.

## Revendications

1. Procédé pour la récupération d'une polyoléfine amorphe de haut poids moléculaire, qui comprend :
la réaction d'un ou plusieurs monomères dans un réacteur pour former une polyoléfine amorphe de haut poids moléculaire ;
le transfert continu de portions de matière contenant la polyoléfine ainsi que du catalyseur résiduel et du ou des monomères n'ayant pas réagi sous forme d'un mélange directement du réacteur à un malaxeur par une conduite qui contient une soupape à impulsions, le malaxeur ayant deux lames sigmoïdes, une conduite de dégazage de malaxeur et une soupape de dégazage de malaxeur pour expulser le ou les monomères n'ayant pas réagi ;
l'expulsion du ou des monomères n'ayant pas réagi hors du malaxeur par la conduite de dégazage et la soupape de dégazage ;
le réglage du fonctionnement de la soupape à impulsions et de la soupape de dégazage de malaxeur pour transférer des portions de matière du réacteur au malaxeur principalement lorsque la soupape à impulsions est ouverte et lorsque la soupape de dégazage de malaxeur est fermée pour éviter sensiblement l'entraînement de la polyoléfine dans la conduite de dégazage du malaxeur pendant l'étape d'expulsion ;
le chauffage du mélange des portions de matière dans le malaxeur à une température d'environ 121 à 260°C (250°F à 500°F) tout en malaxant le mélange pendant un temps suffisant pour éliminer le ou les monomères n'ayant pas réagi de la polyoléfine et faciliter le transfert de la polyoléfine récupérée du malaxeur à une extrudeuse ; et
le réglage des étapes de transfert, chauffage et malaxage des portions de matière pour maintenir une réserve sensiblement constante de la polyoléfine dans le malaxeur.

2. Procédé de la revendication 1, qui comprend de plus la désactivation du catalyseur résiduel contenu dans la polyoléfine contenue dans l'extrudeuse.

3. Procédé de la revendication 2, qui comprend de plus la désactivation du catalyseur par mélange de la polyoléfine avec de la vapeur d'eau dans l'extrudeuse.

4. Procédé de la revendication 1, dans lequel l'étape de malaxage comprend le travail mécanique de la polyoléfine dans le malaxeur avec les deux lames sigmoïdes pendant un temps suffisant pour faciliter l'élimination du ou des monomères n'ayant pas réagi.

5. Procédé de la revendication 1, qui comprend de plus le réglage de la température de la polyoléfine dans l'extrudeuse à une valeur sensiblement égale à la température de la polyoléfine dans le malaxeur.

6. Procédé de la revendication 2, qui comprend de plus le chauffage de la polyoléfine dans l'extrudeuse afin de faciliter l'expulsion de la vapeur d'eau et l'élimination du ou des monomères restants n'ayant pas réagi.

7. Procédé de la revendication 1, dans lequel les portions de matière sont transférées au malaxeur sans y introduire de l'eau.
